# EUROPÄISCHE PATENTSCHRIFT

(11) **EP 4 124 762 B1**
(45) Veröffentlichungstag und Bekanntmachung des Hinweises auf die Patenterteilung: **21.08.2024**
(21) Anmeldenummer: 22182467.5
(22) Anmeldetag: 01.07.2022
(51) Int. Cl.: F16B 9/00, F16B 33/00, F16B 37/04, F16B 37/06

(54) **BEFESTIGUNGSELEMENT**
FASTENING ELEMENT
ÉLÉMENT DE FIXATION

(30) Priorität: 28.07.2021 DE 102021119583
(43) Veröffentlichungstag der Anmeldung: 01.02.2023
(73) Patentinhaber: fischerwerke GmbH & Co. KG, 72178 Waldachtal (DE)
(72) Erfinder: Kosanke, Timo, 72250 Freudenstadt-Dietersweiler (DE); Wälder, Jonas, 71069 Sindelfingen (DE)
(74) Vertreter: Suchy, Ulrich Johannes

(56) Entgegenhaltungen:
- EP-A1- 3 376 059
- DE-A1- 10 062 941
- DE-U1- 29 509 439
- US-A- 3 750 525
- US-A- 3 824 675
- US-A1- 2004 115 025
- US-A1- 2018 058 486
- US-A1- 2021 131 476

## Beschreibung

Die Erfindung betrifft ein Befestigungselement, insbesondere eine Rohrschelle oder einen Schiebegleiter zur Befestigung von Rohren in Gebäuden, wobei Schiebegleiter in der Lage sind, eine thermische Ausdehnung der Rohre zu kompensieren.

Rohrschellen und auch Schiebegleiter sind seit langem bekannt. Die bekannten Rohrschellen bestehen zumeist aus einem runden Schellenkörper zur Aufnahme des zu befestigenden Rohres. Zwischen dem zu befestigenden Rohr und dem Schellenkörper ist meist eine kompressible, elastische Einlage zur thermischen und/oder akustischen Isolierung eingebracht. Eine so aufgebaute Rohrschelle ist beispielweise aus dem deutschen Gebrauchsmuster DE 8223337 U1 bekannt. Die dort abgebildete Rohrschelle weist neben dem Schellenkörper und der elastischen Einlage eine Hülse mit einem Innengewinde auf, welche mit dem Schellenkörper durch Anschweißen verbunden ist und welche zur Aufnahme einer Gewindestange vorgesehen ist. Nachteilig an der dargestellten Rohrschelle ist, dass die Hülse und der Schellenkörper durch Schweißen verbunden sind. Der größte Nachteil hierbei ist, dass es an den Schweißstellen, abhängig vom Einsatzort der Rohrschelle, zur Bildung von Korrosion kommen kann, welche im schlimmsten Fall derart stark ist, dass sich Hülse und Schellenkörper voneinander lösen können und folglich eine stabile Befestigung des Rohres nicht mehr gegeben ist. Ein weiterer Nachteil ist, dass durch den Schweißvorgang Wärme in den Schellenkörper eingebracht wird. Folglich können die elastischen Einlagen, die zumeist einem derartigen Wärmeintrag nicht standhalten, erst nach dem Schweißvorgang und in einen entsprechend abgekühlten Schellenkörper in die Schelle eingebracht werden. Das Dokument US 2018/058486 A1 zeigt ein weiteres Befestigungselement nach dem Stand der Technik.

Ein gattungsgemäßer Schiebegleiter ist beispielsweise aus der deutschen Gebrauchsmusterschrift DE 8406915 U1 bekannt. Auch hier wird, wie bei der zuvor beschriebenen Rohrschelle, eine Hülse in Form einer Gewindemutter an einem Schlitten durch Schweißen befestigt. Dies führt folglich ebenfalls zu der Problematik der Korrosionsbildung.

Aufgabe der Erfindung ist es, ein alternativ gefertigtes Befestigungselement mit einer Hülse vorzuschlagen.

Diese Aufgabe wird erfindungsgemäß durch die Merkmale des Anspruchs 1 gelöst. Die Erfindung lässt sich insbesondere auf Befestigungselemente übertragen, die, wie eingangs erwähnt, Rohrschellen oder Schiebegleiter sind, wobei die erfinderische Idee nicht auf derartige Befestigungselemente beschränkt ist. Das erfindungsgemäße Befestigungselement weist eine Hülse, insbesondere aus Metall, zur Verbindung mit einer Gewindestange auf. Die Hülse erstreckt sich zwischen einer ersten und einer zweiten Stirnseite entlang einer Hülsenlängsachse, wobei eine Länge der Hülse zwischen der ersten und der zweiten Stirnseite definiert ist. Die Hülse weist ein Innengewinde und eine erste Öffnung an der ersten Stirnseite auf, in welche die Gewindestange zur Befestigung am Befestigungselement einschraubbar ist. An der zweiten Stirnseite weist die Hülse eine zweite Öffnung auf. Das Innengwinde kann sich von der ersten Öffnung bis zur zweiten Öffnung erstrecken oder unterbrochen sein. Auch ist es möglich, dass die beiden Öffnungen nicht miteinander verbunden sind, beispielsweise wenn die Hülse beidseitig Sacklochbohrungen aufweist. Dann kann in jeder der Sacklochbohrungen ein Gewinde vorgesehen sein. Bevorzugt ist allerdings eine Hülse mit einer Durchgangsöffnung, die sich von der ersten Öffnung bis zur zweiten Öffnung erstreckt.

Ein Blechteil, insbesondere ein Blechbiegeteil, des Befestigungselements, beispielsweise ein Teil eines Schellenkörpers einer Rohrschelle oder ein Teil eines Schiebegleiters, ist mit der zweiten Öffnung der Hülse verbunden.

Kennzeichnend für die Erfindung ist, dass die Verbindung zwischen dem Blechteil und der zweiten Öffnung ein am Blechteil ausgebildeter hülsenartiger Kragen ist, der in die zweite Öffnung in das Innengewinde der Hülse gepresst, respektive "gezogen" ist und sich von der zweiten Öffnung in Richtung der ersten Öffnung der Hülse erstreckt, wodurch am Außenumfang des Kragens ein zum Innengewinde korrespondierendes Außengewinde gebildet und die Hülse mit dem Blechteil kraft- und formschlüssig verbunden ist. Diese Art der Verbindung überwindet die bekannten Nachteile des Standes der Technik. Ein Wärmeintrag in die Bauteile, wie dies beispielswiese durch Schweißen verursacht wird, entfällt.

Insbesondere wird die Herstellung der Verbindung, also die Ausbildung des Kragens, dadurch erreicht, dass die Hülse in einem ersten Schritt mit der zweiten Stirnseite in Kontakt gebracht, insbesondere auf das Blechteil gepresst wird. Durch ein insbesondere vorgefertigtes Loch im Blechteil, welches insbesondere koaxial zu der zweiten Öffnung orientiert und einen kleineren Durchmesser als die zweite Öffnung aufweist, wird ein Stößel in Richtung der ersten Stirnseite der Hülse getrieben, wodurch das Metall des Blechteils in die Hülse gezogen wird und dadurch der Kragen entsteht. Die Höhe des Kragens ist hierbei abhängig von dem Durchmesser des Lochs im Blechteil. Durch das Eintreiben des Stößels wird also der Kragen gebildet und auf diesem ein Außengewinde aufgeprägt, da das Material in das Innengewinde der Hülse gepresst wird. Das Innengewinde bildet somit eine Negativform für das Außengewinde des Kragens. Abhängig vom Durchmesser des Stößels wird das Außengewinde mehr oder weniger stark ausgeprägt. Durch die Ausbildung des Außengewindes ist die Hülse mit dem Blechteil axialfest und kraft- und formschlüssig verbunden.

Um die Verbindung zwischen Hülse und Blechteil weiter zu verbessern und um einem unbeabsichtigten Herunterdrehen der Hülse von dem Kragen vorzubeugen, ist in einer weiteren vorteilhaften Ausgestaltung der Erfindung zwischen der Hülse und dem Blechteil eine Verdrehsicherung ausgebildet.

In einer weiteren vorteilhaften Ausgestaltung der Erfindung ist die Hülse aus einem Metall gefertigt, welches eine höhere Festigkeit als das Blechteil aufweist. Hierdurch ist gewährleistet, dass während des Einpressens des Kragens in das Innengewinde der Hülse, das Innengewinde nicht oder nur geringfügig deformiert wird, während das Außengewinde auf dem Kragen entsteht. Das Metall des Kragens "fließt" während des Pressvorganges plastisch in das Innengewinde der Hülse, ohne dieses wesentlich zu verändern oder gar zu zerstören. Es kann vorkommen, dass während des Pressvorgangs die Gewindespitzen des Innengewindes leicht plastisch deformiert werden, die Gewindespitzen des Innengewindes also leicht abstumpfen, während der Kragen eingepresst wird

In einer weiteren vorteilhaften Ausgestaltung der Erfindung erstreckt sich der in die Hülse gezogene Kragen des Blechteils von der zweiten Öffnung der Hülse in Richtung der ersten Öffnung über maximal zwei Drittel der Hülsenlänge, bevorzugt über maximal die Hälfte der Hülsenlänge. Insbesondere erstreckt sich der in die Hülse gezogene Kragen mindestens über die doppelte Gewindesteigung, bevorzugt über mindestens die dreifache Gewindesteigung des Innengewindes der Hülse. Dadurch ist zum einen gewährleistet, dass sich der Kragen ausreichend weit in die Hülse erstreckt, um eine stabile Verbindung zwischen dem Blechteil und der Hülse zu erreichen. Zum anderen ist sichergestellt, dass die zu befestigende Gewindestange ausreichend tief in die erste Öffnung eingeschraubt werden kann, bevor diese auf den Kragen stößt und folglich nicht tiefer eingedreht werden kann. Bei einer Durchgangsöffnung kann die Gewindestange insbesondere gegen den Kragen "gekontert" werden, sprich dadurch kann diese vor Herausdrehen aus der Hülse gesichert werden, indem die Gewindestange derart weit in die Hülse gedreht wird, bis diese auf den Kragen stößt. Durch eine Kontermutter, welche auf der Gewindestange angeordnet und gegen die erste Stirnseite der Hülse verspannt werden kann, kann eine zusätzliche oder alternative Konterung erfolgen.

In einer weiteren vorteilhaften Ausgestaltung der Erfindung ist das Innengewinde ein metrisches Gewinde. Dieses Gewindeart begünstigt die Ausbildung des Außengewindes auf dem Kragen während des Pressvorgangs. Zudem weisen die meisten gattungsgemäßen Gewindestangen ebenfalls korrespondierende metrische Gewinde auf.

In einer weiteren vorteilhaften Ausgestaltung der Erfindung ist in einem Verbindungsbereich der Hülse eine Flankenhöhe des Innengewindes der Hülse kleiner als eine Flankenhöhe des Innengewindes in einem Befestigungsbereich der Hülse. Der Verbindungsbereich erstreckt sich hierbei von der zweiten Stirnseite in Richtung der ersten Stirnseite der Hülse, während sich der Befestigungsbereich zur Aufnahme der Gewindestange von der ersten Stirnseite in Richtung der zweiten Stirnseite erstreckt. Der Verbindungsbereich ist der Bereich, in welchem das Außengewinde des Kragens in das Innengewinde der Hülse eingreift. In diesem Bereich können, wie bereits erwähnt, die Flanken des Innengewindes leicht deformiert sein, was zu einer geringeren Flankenhöhe in diesem Bereich führt. Durch das leicht deformierte Innengewinde, also durch die plastische Deformation im Befestigungsbereich, wird das Herunterdrehen der Hülse vom Kragen zusätzlich erschwert. Im Befestigungsbereich ist die Flankenhöhe höher, da hier kein Einpressen des Kragens in das Innengewinde und folglich keine Schädigung desselben stattfindet. Durch die "unbeschädigten" Flanken im Befestigungsbereich ist ein leichtes Einschrauben und ein stabiler Halt der Gewindestange garantiert. Insbesondere gehen der Verbindungsbereich und der Befestigungsbereich direkt ineinander über. Es kann jedoch zwischen diesen beiden Bereichen ein Zwischenbereich existieren, welcher gewindelos sein kann.

Um eine möglichst stabile Verdrehsicherung zwischen der Hülse und dem Blechteil, respektive zwischen der Hülse und dem Kragen herzustellen, ist in einer weiteren Ausgestaltung der Erfindung eine Verdrehsicherung zwischen der Hülse und dem Blechteil durch eine Strukturierung gebildet, insbesondere einem in das Blechteil eingeprägten Rändel, der insbesondere kreisrund ist, mit welchem eine Kontaktfläche an der zweiten Stirnseite der Hülse verpresst ist. Die Kontaktfläche kann bereits vor dem Zusammenfügen der Hülse und des Blechteils eine mit der Strukturierung korrespondierende Struktur aufweisen. Sind die Hülse und das Blechteil zusammengefügt, kann die strukturierte Kontaktfläche beispielsweise zahnartig in das eingeprägte Rändel im Blechteil eingreifen. Dadurch ist es nicht mehr möglich, die Hülse relativ zum entstandenen Kragen bezüglich der Hülsenlängsachse zu verdrehen, respektive die Hülse von dem Außengewinde des Kragens herunterzudrehen, da dies durch das Zusammenwirken der Kontaktfläche und dem Rändel verhindert oder zumindest stark erschwert wird. Die Kontaktfläche an der zweiten Stirnseite der Hülse kann im Wesentlichen glatt sein, was bedeutet, dass die Kontaktfläche nicht vorstrukturiert wird. Obwohl das Metall der Hülse eine höhere Festigkeit aufweist als das Blechteil und somit auch eine höhere Festigkeit als die Strukturierung im Blechteil, sorgt das Pressen der Kontaktfläche auf die Strukturierung dafür, dass die Strukturierung zumindest geringfügig in die Kontaktfläche "eingepresst" wird, was ebenfalls, wenn auch nicht so stark, zu der beschriebenen Verdrehsicherung führt. Dieses Verhalten ist vergleichbar mit der geringfügigen Deformation des Innengewindes der Hülse während des Einpressens des Kragens. Eine vorstrukturierte Kontaktfläche an der zweiten Stirnseite führt zu einer stabileren Verdrehsicherung. Natürlich kann die zweite Stirnseite der Hülse selbst eine Strukturierung vor dem Zusammenfügen mit dem Blechteil, beispielsweise eine Rändelung, aufweisen. Diese Strukturierung kann in das Blechteil eingepresst werden, wodurch die strukturierte Kontaktfläche ausgebildet wird.

In einer weiteren besonders bevorzugten Ausgestaltung der Erfindung ist die Verdrehsicherung zwischen dem Kragen des Blechteils und der Hülse zusätzlich oder alternativ dadurch ausgebildet, dass der Kragen eine Kragenstirnfläche mit mindestens einer Vertiefung in Richtung der zweiten Stirnseite der Hülse aufweist. Anders formuliert, ist ein Abstand der Kragenstirnfläche zur ersten Stirnseite der Hülse nicht über den kompletten Kragenumfang identisch. Im Bereich der Vertiefung ist kein Außengewinde in den Kragen eingeprägt und folglich ist im Bereich der Vertiefung auch nicht das sich im Bereich der Vertiefung befindliche Innengewinde der Hülse deformiert. Außerhalb der Vertiefung, beziehungsweise unmittelbar an die Vertiefung angrenzend, ist das Außengewinde auf den Kragen wie beschrieben durch das Innengewinde der Hülse aufgeprägt, wodurch das Innengewinde leicht deformiert wird. Durch die leichte Deformation des Innengewindes wird beim Einpressen des Kragens das Außengewinde auf dem Kragen nicht gänzlich ausgebildet. Anders formuliert, entspricht das Außengewinde nur teilweise dem ursprünglichen Innengewinde. Folglich würde der Versuch eines Herunterdrehens der Hülse vom Kragen dazu führen, dass das unverformte Innengewinde im Bereich der Vertiefung verklemmen würde, da, wie beschrieben, das Außengewinde nicht vollständig ausgebildet ist. Dadurch ist eine alternative oder zusätzliche Verdrehsicherung realisiert. Eine stärkere Krafteinwirkung würde dazu führen, dass durch das intakte Innengewinde im Bereich der Vertiefung eine Gewindefurchung des Außengewindes passieren würde. Das intakte Innengewinde würde sich folglich durch das nur teilweise ausgebildete Außengewinde furchen müssen, was nur mit erheblichem Kraftaufwand möglich wäre. Die beschriebenen Vertiefungen im Kragen, respektive in der Kragenstirnfläche können dadurch hergestellt sein, dass das vorgefertigte Loch im Blechteil nicht kreisrund ausgeführt ist, was zu einer ebenen Kragenstirnfläche führen würde, also einer Kragenstirnfläche ohne Vertiefung, sondern als Langloch ausgebildet ist. Ein Langloch als vorgefertigtes Loch ergibt nach der Herstellung des Kragens zwei sich gegenüberliegende Vertiefungen in der Kragenstirnfläche.

Um den Effekt der eben beschriebenen Verklemmung und der dadurch realisierten Verdrehsicherung zu gewährleisten, entspricht in einer weiteren vorteilhaften Ausgestaltung der Erfindung die Vertiefung mindestens der halben Gewindesteigung, bevorzugt mindestens der Gewindesteigung des Innengewindes der Hülse. Dadurch ist gewährleistet, dass im Bereich der Vertiefung genügend Gewindeflanke vorhanden ist, dass es bei einem versuchten Herunterdrehen der Hülse von dem Kragen zu dem bereits beschriebenen Verklemmungs- bzw. Furcheffekt kommt. Die Vertiefung kann jedoch auch tiefer ausgebildet sein, was dazu führt, dass mehrere Gewindeflanken des unverformten Innengewindes folglich für ein Verklemmen bzw. Furchen sorgen.

In einer weiteren vorteilhaften Ausgestaltung der Erfindung weist die Kragenstirnfläche mehrere, insbesondere identisch ausgebildete Vertiefungen auf, die bezüglich der Hülsenlängsachse drehsymmetrisch sind. Insbesondere weist die Kragenstirnfläche zwei bezüglich der Hülsenlängsachse gegenüberliegende Vertiefungen auf. Durch die mehreren Vertiefungen entsteht der Klemm- bzw. Furcheffekt folglich an mehreren Stellen, wodurch eine noch stabilere Mitdrehsicherung gewährleistet ist.

Wie bereits erwähnt, ist die erfinderische Idee besonders geeignet, um bei einer Rohrschelle Anwendung zu finden. Somit handelt es sich bei dem Befestigungselement insbesondere um eine Rohrschelle, wobei über die Hülse und einer Gewindestange die Rohrschelle an einem Befestigungsgrund festlegbar ist und wobei das Blechteil ein Schellenbügel der Rohrschelle ist. Wie ebenfalls erwähnt, ist die erfinderische Idee zudem sehr gut geeignet, um bei einem Schiebegleiter Anwendung zu finden.

Es sind Ausführungen der Erfindung möglich, die nicht alle Merkmale eines abhängigen Anspruchs aufweisen.

Ausführungen der Erfindung, die nicht alle Merkmale des Ausführungsbeispiels aufweisen, sind möglich.

Die Erfindung wird nachfolgend anhand eines Ausführungsbeispiels erklärt.

Es zeigen:
- Figur 1: einen Teil eines erfindungsgemäßen Befestigungselements in einer perspektivischen Schnittdarstellung;
- Figur 2: eine weitere Schnittdarstellung des Teils des Befestigungselements der Figur 1;
- Figur 3: ein Blechteil des Befestigungselements; und
- Figur 4: eine Detaildarstellung des Blechteils der Figur 3 und einer Hülse des Befestigungselements aus den Figuren 1 und 2.

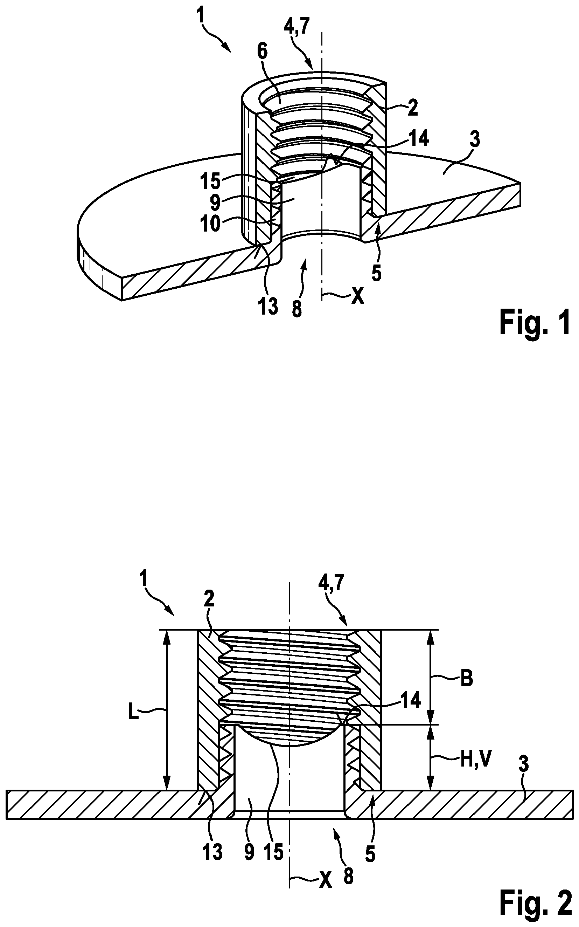

In den Figuren 1 und 2 ist ein Teil eines erfindungsgemäßen Befestigungselements 1 dargestellt. Bei dem Befestigungselement 1 kann es sich um einen Teil einer Rohrschelle zum Befestigen von Rohren oder um einen Teil eines sogenannten Schiebegleiters handeln, mit welchen thermische Ausdehnungen von Rohren kompensiert werden können. Die Rohrschelle bzw. der Schiebegleiter ist nicht im Detail dargestellt und wird auch im Folgenden nicht im Detail erläutert, da sich der Kern der Erfindung auf den Teil des Befestigungselements 1 bezieht. Das Teil des Befestigungselements 1 (im Folgenden lediglich Befestigungselement 1 genannt) weist eine Hülse 2 aus Metall, hier Stahl, sowie ein Blechteil 3 auf. Bei dem Blechteil 3 handelt es sich um ein Blechbiegeteil aus einem Stahlblech. Das Blechteil 3 ist beispielsweise ein Teil eines Schellenbügels einer Rohrschelle (nicht dargestellt). Das Blechteil 3 weist eine geringere Festigkeit als die Hülse 2 auf. Die Hülse 2 erstreckt sich entlang einer Hülsenlängsachse X zwischen einer ersten Stirnseite 4 mit einer ersten Öffnung 7 und einer zweiten Stirnseite 5 mit einer zweiten Öffnung 8. Die Hülse 2 weist ein durchgehendes, sich über eine komplette Länge L der Hülse 2 erstreckendes metrisches Innengewinde auf. Die Hülse 2 ist mit dem Blechteil 3 über einen aus dem Blechteil 3 gebildeten Kragen 9 verbunden, wobei der Kragen 9 aus dem Blechteil 3 in die zweite Öffnung 8 in das Innengewinde 6 der Hülse 2 gezogen ist.

Der Kragen 9 weist eine Höhe H auf und ist in einem Verbindungsbereich V mit der Hülse 2 kraft- und formschlüssig verbunden. An den Verbindungsbereich V schließt sich ein Befestigungsbereich B an. Der Befestigungsbereich B dient zur Aufnahme einer metrischen Gewindestange (nicht dargestellt). Die metrische Gewindestange kann derart weit in die erste Öffnung 7 der Hülse 2 eingeschraubt werden, bis die Gewindestange auf eine Kragenstirnfläche 14 trifft. Die Gewindestange kann gegen die Kragenstirnfläche 14 gekontert werden. Dadurch, dass der Kragen 9 in das Innengewinde 6 der Hülse 2 eingepresst ist, bildet sich auf dem Außenumfang des Kragens 9 ein mit dem metrischen Innengewinde 6 korrespondierendes Außengewinde 10 im Verbindungsbereich V aus. Die Kragenstirnfläche 14 weist zwei bezüglich der Hülsenlängsachse X gegenüberliegende Vertiefungen 15 auf, wobei durch die Schnittdarstellung der Figuren 1 und 2 lediglich eine Vertiefung 15 zu erkennen ist.

Um zu vermeiden, dass die Hülse 2 von dem Kragen 9 heruntergedreht werden kann, weist das Befestigungselement 1 zwei unterschiedliche Arten von Verdrehsicherungen auf, deren Funktionsweise im Folgenden im Detail erläutert wird. Eine erste Verdrehsicherung ist durch die Vertiefungen 15 in der Kragenstirnfläche 14 ausgebildet. Die Funktionsweise wird durch Betrachtung der Figur 2 ersichtlich. Im Verbindungsbereich V ist der Kragen 9 in das Innengewinde 6 der Hülse 2 eingepresst. Dadurch formt sich am Außenumfang des Kragens 9 das Außengewinde 10. Obwohl das Metall der Hülse 2 hierbei eine höhere Festigkeit als das Blechteil 3 aufweist, wird das Innengewinde 6 im Verbindungsbereich V leicht eingedrückt. Insbesondere werden die Spitzen der Gewindeflanken des Innengewindes 6 hierbei leicht eingedrückt. Dadurch, dass das Innengewinde 6 leicht eingedrückt wird, entspricht das im Verbindungsbereich V entstehende Außengewinde 10 nicht dem exakten Negativ des ursprünglichen metrischen Innengewindes 6, also dem "unbeschädigten" Innengewinde 6 im Befestigungsbereich B. Jedoch weist die Kragenstirnfläche 14, wie bereits erwähnt, zwei Vertiefungen 15 auf, die sich in Richtung des Blechteils 3, respektive der zweiten Stirnseite 5 der Hülse 2 erstrecken. Wie in Figur 2 gut ersichtlich, ist im Bereich der Vertiefungen 15 eine Gewindeflanke angeordnet, welche nicht durch das Ziehen des Kragens 9 in die Hülse 2 beschädigt ist. Diese Flanke entspricht also dem restlichen Innengewinde 6 im Befestigungsbereich B. Würde nun versucht werden, die Hülse 2 von dem Außengewinde 10 des Kragens 9 herunterzudrehen, im Ausführungsbeispiel entgegen dem Uhrzeigersinn, würde sich die Gewindeflanke, die in der Vertiefung 15 angeordnet ist, gegenüber dem Außengewinde 10 des Kragens 9 verklemmen und bei starker Krafteinwirkung im Außengewinde 10 eine gewindefurchende Wirkung entfalten. Durch die zwei Vertiefungen 15 ist eine erste Verdrehsicherung zwischen Hülse 2 und Blechteil 3, respektive Kragen 9 ausgebildet. Der größte Vorteil dieser Verdrehsicherung ist, dass diese rein kraft- und formschlüssig ist. Somit kann auf eine stoffschlüssige Verdrehsicherung, insbesondere Schweißen, was zur Bildung von Korrosion an der Schweißstelle führen könnte, verzichtet werden.

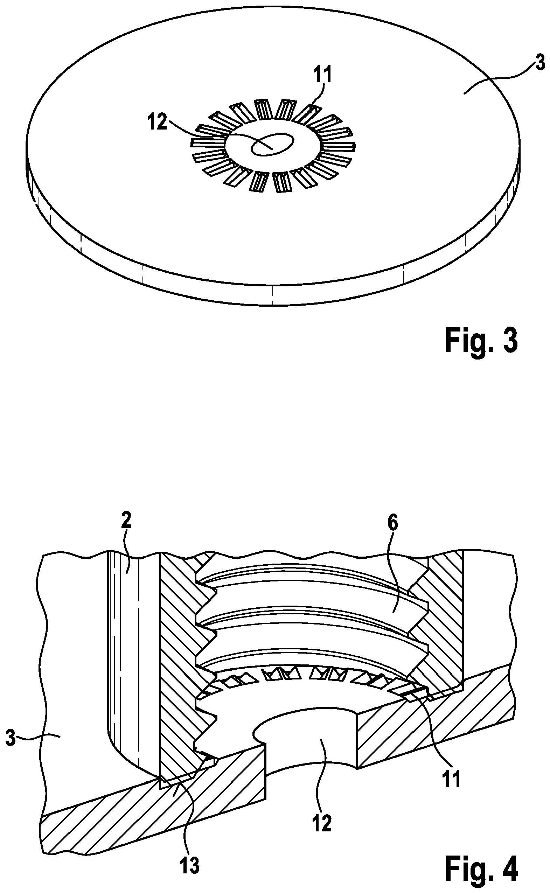

Im Folgenden soll kurz die Bildung des Kragens 9 sowie die Entstehung der Vertiefungen 15 und der damit realisierten, eben beschriebenen Verdrehsicherung erläutert werden. Figur 3 zeigt das Blechteil 3, bevor es mit der Hülse 2 durch die Bildung des Kragens 9 verbunden wurde. Das Blechteil 3 weist eine kreisrunde Strukturierung 11 und ein durchgehendes Loch 12 auf. Auf die Funktion der Strukturierung 11 wird im Folgenden noch genauer eingegangen. Um die Hülse 2 mit dem Blechteil 3 zu verbinden, wird die Hülse 2 mit der zweiten Stirnseite 5 so auf das Blechteil 3 aufgesetzt, dass das Loch 12 mit der ersten Öffnung 7 und der zweiten Öffnung 8 der Hülse 2 im Wesentlichen koaxial ist. In dieser Position werden die Hülse 2 und das Blechteil 3 aneinandergehalten. Wird nun ein Stößel "von unten" in das Loch 12 eingestoßen, wird aus dem Bereich des Blechteils 3, der sich zwischen der Strukturierung 11 und dem Loch 12 befindet, der Kragen 9 ausgebildet, also dieser in das Innengewinde 6 der Hülse 2 gezogen, respektive gepresst. Dadurch, dass das Loch 12 langlochförmig ist, entstehen die Vertiefungen 15, wie in den Figuren 1 und 2 ersichtlich, und somit die oben beschriebene Verdrehsicherung.

Eine zweite Verdrehsicherung zwischen der Hülse 2 und dem Blechteil 3 ist durch die Kontaktfläche 13 in Kombination mit der Strukturierung 11, die rändelförmig ist, ausgebildet. Hierzu wird, bevor der Kragen 9 ausgebildet wird, die Kontaktfläche 13 fest auf die Strukturierung 11 gepresst. Obwohl die Hülse 2 aus einem Metall mit einer höheren Festigkeit besteht als das Blechteil 3, sorgt das Aufeinanderpressen dafür, dass sich die Strukturierung 11 zumindest geringfügig in die Kontaktfläche 13 einprägt. Dadurch entsteht an dieser Stelle eine form- und/oder reibschlüssige Verbindung, welche ebenfalls einem Herunterdrehen der Hülse 2 von dem Kragen 9 entgegenwirkt. Die Kontaktfläche 13 kann auch eine mit der Strukturierung 11 korrespondierende Struktur aufweisen, wodurch der Effekt nochmals verstärkt wird. Auch diese Art der Verdrehsicherung ist rein kraft- und formschlüssiger Natur.

Beide beschriebenen Arten der Verdrehsicherungen ergänzen einander und können sowohl jeweils einzeln als auch zusammen, wie im vorliegenden Ausführungsbeispiel gezeigt, verwendet werden.

### Bezugszeichenliste

### Befestigungselement

- 1: Befestigungselement
- 2: Hülse
- 3: Blechteil
- 4: erste Stirnseite der Hülse 2
- 5: zweite Stirnseite der Hülse 2
- 6: Innengewinde der Hülse 2
- 7: erste Öffnung der Hülse 2
- 8: zweite Öffnung der Hülse 2
- 9: Kragen
- 10: Außengewinde des Kragens 9
- 11: Strukturierung
- 12: Loch im Blechteil 3
- 13: Kontaktfläche an der zweiten Stirnseite 5 der Hülse 2
- 14: Kragenstirnfläche
- 15: Vertiefung
- H: Höhe des Kragens 9
- L: Länge der Hülse 2
- X: Hülsenlängsachse
- V: Verbindungsbereich
- B: Befestigungsbereich

## Patentansprüche

1. Befestigungselement (1), insbesondere eine Rohrschelle oder ein Schiebegleiter zur Befestigung von Rohren in Gebäuden, aufweisend:
- eine Hülse (2) zur Verbindung mit einer Gewindestange, wobei die Hülse (2) eine Länge (L) aufweist und sich zwischen einer ersten Stirnseite (4) und einer zweiten Stirnseite (5) entlang einer Hülsenlängsachse (X) erstreckt und ein Innengewinde (6) aufweist, wobei die Hülse (2) an der ersten Stirnseite (4) eine erste Öffnung (7) zur Aufnahme der Gewindestange und an der zweiten Stirnseite (5) eine zweite Öffnung (8) aufweist,
- ein Blechteil (3), welches mit der zweiten Öffnung (8) der Hülse (2) verbunden ist,
**dadurch gekennzeichnet, dass** die Verbindung zwischen dem Blechteil (3) und der zweiten Öffnung (8) ein am Blechteil (3) ausgebildeter hülsenartiger Kragen (9) ist, der in das Innengewinde (6) der Hülse (2) gepresst ist und sich von der zweiten Öffnung (8) in Richtung der ersten Öffnung (7) der Hülse (2) erstreckt, wodurch am Außenumfang des Kragens (9) ein zum Innengewinde (6) korrespondierendes Außengewinde (10) gebildet und die Hülse (2) mit dem Blechteil (3) kraft- und formschlüssig verbunden ist.

2. Befestigungselement (1) nach Anspruch 1, **dadurch gekennzeichnet, dass** zwischen der Hülse (2) und dem Blechteil (3) eine Verdrehsicherung ausgebildet ist.

3. Befestigungselement (1) nach Anspruch 1 oder 2, **dadurch gekennzeichnet, dass** die Hülse (2) aus Metall ist und eine höhere Festigkeit als das Blechteil (3) aufweist.

4. Befestigungselement (1) nach einem der Ansprüche 1 bis 3, **dadurch gekennzeichnet, dass** sich der Kragen (9) des Blechteils (3) von der zweiten Öffnung (8) in Richtung der ersten Öffnung (7) der Hülse (2) über maximal zwei Drittel der Hülsenlänge (L), bevorzugt über maximal die Hälfte der Hülsenlänge (L) erstreckt.

5. Befestigungselement (1) nach einem der Ansprüche 1 bis 4, **dadurch gekennzeichnet, dass** das Innengewinde (6) ein metrisches Gewinde ist.

6. Befestigungselement (1) nach einem der Ansprüche 1 bis 5, **dadurch gekennzeichnet, dass** in einem Verbindungsbereich (V) der Hülse (2) eine Flankenhöhe des Innengewindes (6) der Hülse (2) kleiner ist als eine Flankenhöhe des Innengewindes (6) in einem Befestigungsbereich (B) der Hülse (2).

7. Befestigungselement (1) nach einem der Ansprüche 1 bis 6, **dadurch gekennzeichnet, dass** eine Verdrehsicherung zwischen der Hülse (2) und dem Blechteil (3) durch eine Strukturierung (11), insbesondere durch einen in das Blechteil eingeprägten Rändel, mit welchem eine Kontaktfläche (13) an der zweiten Stirnseite (5) der Hülse (2) verpresst ist, gebildet ist.

8. Befestigungselement (1) nach einem der Ansprüche 1 bis 7, **dadurch gekennzeichnet, dass** eine Verdrehsicherung zwischen dem Kragen (9) des Blechteils (2) und der Hülse (3) dadurch ausgebildet ist, dass der Kragen (9) eine Kragenstirnfläche (14) mit mindestens einer Vertiefung (15) in Richtung der zweiten Stirnseite (5) der Hülse (2) aufweist.

9. Befestigungselement (1) nach Anspruch 8, **dadurch gekennzeichnet, dass** die Vertiefung (15) mindestens der halben Gewindesteigung, bevorzugt mindestens der Gewindesteigung des Innengewindes (6) der Hülse (2) entspricht.

10. Befestigungselement (1) nach Anspruch 8 oder 9, **dadurch gekennzeichnet, dass** die Kragenstirnfläche (14) mehrere, insbesondere identisch ausgebildete, Vertiefungen (15) aufweist, die bezüglich der Hülsenlängsachse (X) drehsymmetrisch sind.

11. Befestigungselement (1) nach einem der vorigen Ansprüche, **dadurch gekennzeichnet, dass** das Befestigungselement (1) eine Rohrschelle ist, wobei über die Hülse (2) und eine Gewindestange die Rohrschelle an einem Befestigungsgrund festlegbar ist und wobei das Blechteil (3) ein Schellenbügel der Rohrschelle ist.

## Claims

1. A fastening element (1), in particular a pipe clamp or a sliding member for fastening pipes in buildings, comprising:
- a sleeve (2) for connecting to a threaded rod, the sleeve (2) having a length (L) and extending between a first end face (4) and a second end face (5) along a longitudinal axis (X) of the sleeve and having an internal thread (6), the sleeve (2) having a first opening (7) on the first end face (4) for receiving the threaded rod and a second opening (8) on the second end face (5),
- a sheet metal part (3), which is connected to the second opening (8) of the sleeve (2),
**characterized in that** the connection between the sheet metal part (3) and the second opening (8) is a sleeve-like collar (9) formed on the sheet metal part (3), the collar being pressed into the internal thread (6) of the sleeve (2) and extending from the second opening (8) in the direction of the first opening (7) of the sleeve (2), whereby an external thread (10) corresponding to the internal thread (6) is formed on the outer circumference of the collar (9) and the sleeve (2) is connected to the sheet metal part (3) in a friction-locking and positive-locking manner.

2. The fastening element (1) according to claim 1, **characterized in that** an anti-rotation device is formed between the sleeve (2) and the sheet metal part (3).

3. The fastening element (1) according to either claim 1 or claim 2, **characterized in that** the sleeve (2) is made of metal and has a higher strength than the sheet metal part (3).

4. The fastening element (1) according to any of claims 1 to 3, **characterized in that** the collar (9) of the sheet metal part (3) extends from the second opening (8) in the direction of the first opening (7) of the sleeve (2) over a maximum of two thirds of the sleeve length (L), preferably over a maximum of half of the sleeve length (L).

5. The fastening element (1) according to any of claims 1 to 4, **characterized in that** the internal thread (6) is a metric thread.

6. The fastening element (1) according to any of claims 1 to 5, **characterized in that,** in a connecting region (V) of the sleeve (2), a flank height of the internal thread (6) of the sleeve (2) is smaller than a flank height of the internal thread (6) in a fastening region (B) of the sleeve (2).

7. The fastening element (1) according to any of claims 1 to 6, **characterized in that** an anti-rotation device between the sleeve (2) and the sheet metal part (3) is formed by a texturing (11), in particular by a knurling embossed into the sheet metal part with which a contact surface (13) is pressed against the second end face (5) of the sleeve (2).

8. The fastening element (1) according to any of claims 1 to 7, **characterized in that** an anti-rotation device is formed between the collar (9) of the sheet metal part (2) and the sleeve (3) by the collar (9) having a collar end face (14) with at least one recess (15) in the direction of the second end face (5) of the sleeve (2).

9. The fastening element (1) according to claim 8, **characterized in that** the recess (15) corresponds to at least half the thread pitch, preferably at least the thread pitch of the internal thread (6) of the sleeve (2).

10. The fastening element (1) according to either claim 8 or claim 9, **characterized in that** the collar end face (14) has a plurality of recesses (15), in particular of identical design, which are rotationally symmetrical with respect to the longitudinal axis (X) of the sleeve.

11. The fastening element (1) according to any of the preceding claims, **characterized in that** the fastening element (1) is a pipe clamp, it being possible to fix the pipe clamp to a fastening base via the sleeve (2) and a threaded rod and the sheet metal part (3) being a clamp bracket of the pipe clamp.

## Revendications

1. Élément de fixation (1), en particulier collier de serrage ou glissière, pour la fixation de tuyaux dans des bâtiments, présentant :
- une douille (2) destinée à être reliée à une tige filetée, la douille (2) présentant une longueur (L) et s'étendant entre une première face frontale (4) et une seconde face frontale (5) le long d'un axe longitudinal de douille (X) et présentant un filetage intérieur (6), la douille (2) présentant, sur la première face frontale (4), une première ouverture (7) destinée à recevoir la tige filetée et présentant une seconde ouverture (8) sur la seconde face frontale (5),
- une pièce en tôle (3) qui est reliée à la seconde ouverture (8) de la douille (2),
**caractérisé en ce que** la liaison entre la pièce en tôle (3) et la seconde ouverture (8) est une collerette (9) en forme de douille formée sur la pièce en tôle (3), laquelle collerette est pressée dans le filetage intérieur (6) de la douille (2) et s'étend à partir de la seconde ouverture (8) en direction de la première ouverture (7) de la douille (2), moyennant quoi un filetage extérieur (10) correspondant au filetage intérieur (6) est formé sur la périphérie extérieure de la collerette (9) et la douille (2) est reliée à la pièce en tôle (3) par adhérence et par complémentarité de formes.

2. Élément de fixation (1) selon la revendication 1, **caractérisé en ce qu'**un blocage anti-rotation est réalisé entre la douille (2) et la pièce en tôle (3).

3. Élément de fixation (1) selon la revendication 1 ou 2,
**caractérisé en ce que** la douille (2) est en métal et présente une résistance supérieure à celle de la pièce en tôle (3).

4. Élément de fixation (1) selon l'une des revendications 1 à 3, **caractérisé en ce que** la collerette (9) de la pièce en tôle (3) s'étend depuis la seconde ouverture (8) en direction de la première ouverture (7) de la douille (2) sur au maximum deux tiers de la longueur de douille (L), de préférence sur au maximum la moitié de la longueur de douille (L).

5. Élément de fixation (1) selon l'une des revendications 1 à 4, **caractérisé en ce que** le filetage intérieur (6) est un filetage métrique.

6. Élément de fixation (1) selon l'une des revendications 1 à 5,
**caractérisé en ce que**, dans une zone de liaison (V) de la douille (2), une hauteur de flanc du filetage intérieur (6) de la douille (2) est inférieure à une hauteur de flanc du filetage intérieur (6) dans une zone de fixation (B) de la douille (2).

7. Élément de fixation (1) selon l'une des revendications 1 à 6, **caractérisé en ce qu'**un blocage anti-rotation entre la douille (2) et la pièce en tôle (3) est formé par une structuration (11), en particulier par un moletage estampé dans la pièce en tôle, moletage au moyen duquel une surface de contact (13) est pressée sur la seconde face frontale (5) de la douille (2).

8. Élément de fixation (1) selon l'une des revendications 1 à 7, **caractérisé en ce qu'**un blocage anti-rotation est réalisé entre la collerette (9) de la pièce en tôle (2) et la douille (3) par le fait que la collerette (9) présente une face frontale de collerette (14) comportant au moins un évidement (15) en direction de la seconde face frontale (5) de la douille (2).

9. Élément de fixation (1) selon la revendication 8, **caractérisé en ce que** l'évidement (15) correspond au moins à la moitié du pas de filetage, de préférence au moins au pas de filetage du filetage intérieur (6) de la douille (2).

10. Élément de fixation (1) selon la revendication 8 ou la revendication 9, **caractérisé en ce que** la surface frontale de collerette (14) présente plusieurs évidements (15) réalisés en particulier de manière identique et symétriques en rotation par rapport à l'axe longitudinal de douille (X).

11. Élément de fixation (1) selon l'une des revendications précédentes, **caractérisé en ce que** l'élément de fixation (1) est un collier de serrage, le collier de serrage pouvant être fixé à une base de fixation par l'intermédiaire de la douille (2) et d'une tige filetée, et la pièce en tôle (3) étant un étrier de collier du collier de serrage.
